# EUROPÄISCHE PATENTANMELDUNG

(11) **EP 2 696 063 A1**
(43) Veröffentlichungstag der Anmeldung: **12.02.2014**
(21) Anmeldenummer: 12179729.4
(22) Anmeldetag: 08.08.2012
(51) Int. Cl.: F02M 31/14

(54) **Vorrichtung zum Vorwärmen von Kraftstoff**

(71) Anmelder: Waldland Naturstoffe GmbH, 3533 Friedersbach (AT)
(72) Erfinder: Spandl, Stefan, 2011 Sierndorf (AT)
(74) Vertreter: Oberhardt, Knut

(57) **Zusammenfassung**

Die Erfindung geht aus von einer Vorrichtung zum Vorwärmen von Kraftstoff (8) in einem Kraftfahrzeug oder einer selbstfahrenden Arbeitsmaschine, mit Verbrennungsmotor (1) und Personenkabine (3), wobei der Verbrennungsmotor (1) über ein Kühlmedium (9, 10) gekühlt und eine Heizung (4, 5) für die Personenkabine (3) über das Kühlmedium (9, 10) erwärmt wird, mit einem Wärmetauscher (7) für die Kraftstoffvorwärmung, durch den Wärmeenergie von dem Kühlmedium (9) auf den Kraftstoff (8) übertragen wird. Erfindungsgemäß ist eine Regulierung (6) für den Wärmetauscher (7) vorgesehen, die direkt an eine Regulierung der Heizung (4, 5) gekoppelt ist.

## Beschreibung

Die Erfindung betrifft Vorrichtung zum Vorwärmen von Kraftstoff nach dem Oberbegriff von Anspruch 1.

In der DE 197 36 283 A1 ist ein Kraftstoffleitsystem offenbart, welches einen Kraftstoffvorwärmer vorsieht. Dieser Kraftstoffvorwärmer ist dann wichtig, wenn Kraftstoffe verwendet werden, deren Viskosität sich bei Temperaturänderungen stark verändert und wenn der aus dem Tank geförderte Kraftstoff bei niedrigen Außentemperaturen sehr zäh ist. So kann es bei Hochdruck-Systemen, wie beispielsweise bei einem Common-Rail-System dazu kommen, dass die Hochdruckpumpe nur unvollständig gefüllt wird und/oder dass die Injektoren, die heute meist durch den Kraftstoff selbst gesteuert werden, nicht richtig funktionieren. Durch die Vorwärmung des Kraftstoffes in dem Kraftstoffvorwärmer wird die Viskosität abgesenkt, die Hochdruckpumpe kann schneller und sicherer gefüllt werden und die Injektoren spritzen den Kraftstoff entsprechend der Ansteuerung ein.

Es hat sich jedoch herausgestellt, dass bei hohen Außentemperaturen eine Vorwärmung des Kraftstoffes nachteilig sein kann. Bei neueren Hochdruckeinspritzsystemen wird der Kraftstoff auch zur Kühlung der Hochdruckpumpe genutzt. Das bedeutet aber, dass der Kraftstoff, der der Hochdruckpumpen zugeführt wird, eine bestimmte Höchsttemperatur nicht überschreiten sollte.

Bei hoher Außentemperatur und zugeschalteter Kraftstoffvorwärmung kann es auch dazu kommen, dass der Kraftstoff durch die hohe Verdichtung in der Hochdruckpumpe auf eine Temperatur gebracht wird, bei der bereits die Blasenbildung einsetzt. In diesem Zustand ist kein ordnungsgemäßer Betrieb der Brennkraftmaschine mehr zu gewährleisten.

Es wurde deshalb bereits der Vorschlag gemacht, einen Bypass mit einer Viskositätssteuerung vorzusehen. Das bedeutet, dass ein sehr zäher Kraftstoff über den Vorwärmer, ein warmer flüssiger Kraftstoff dagegen über den Bypass geführt wird.

Es wurde auch schon vorgeschlagen, den Vorwärmer über einen Außentemperaturfühler zu steuern. Auf diese Weise kann bei sehr niederer Außentemperatur stark, bei mittlerer Außentemperatur wenig und bei hoher Außentemperatur überhaupt nicht vorgeheizt werden.

Der Erfindung liegt die Aufgabe zugrunde, eine Vorrichtung zum Vorwärmen von Kraftstoff so auszugestalten, dass auch Kraftstoff mit geringen Viskositätsschwankungen immer richtig temperiert wird, dass dafür aber keine aufwändige zusätzliche Elektronik, wie beispielsweise ein Außentemperaturfühler und die entsprechende Auswertesteuerung verbaut werden muss.

Gelöst wird die Aufgabe gemäß der Erfindung durch eine Vorrichtung zum Vorwärmen von Kraftstoff mit den Merkmalen von Anspruch 1. Weitere Einzelheiten und Vorteile der Erfindung ergeben sich aus den Unteransprüchen.

Erfindungsgemäß ist eine Regulierung für den Wärmetauscher für die Kraftstoffvorwärmung vorgesehen, die direkt an eine Regulierung der Heizung gekoppelt ist. Dabei wird davon ausgegangen, dass die Heizung für die Personenkabine immer entsprechend der Außentemperatur eingestellt ist. Es spielt hier keine Rolle, ob die Heizung über eine Automatik geregelt, oder manuell eingestellt wird. Wird die Heizung über eine Automatik geregelt, so wird durch die Kopplung die Automatik gleichzeitig auch für die Vorwärmung des Kraftstoffs verwendet. Es ist für die der Außentemperatur entsprechende, richtige Vorwärmung des Kraftstoffs also weder ein zusätzlicher Temperatursensor, noch eine zusätzliche Steuerelektronik notwendig.

Auch bei einer manuellen Regelung für die Heizung der Personenkabine ist davon auszugehen, dass die Heizung so eingestellt wird, dass es für die Personen in der Kabine weder zu kalt noch zu warm ist. Da die Innentemperatur der Personenkabine hauptsächlich von der Außentemperatur abhängt, ist folglich auch die manuelle Regelung der Heizung von der Außentemperatur abhängig. Damit erfährt auch die Vorwärmung des Kraftstoffs - ohne zusätzlichen Sensor und ohne zusätzliche Steuerelektronik - eine von der Außentemperatur abhängige Regelung.

Grundsätzlich lässt sich die Erfindung auch bei einem luftgekühlten Verbrennungsmotor anwenden. In diesem Fall müsste für die Vorwärmung des Kraftstoffs ein Gasförmig-Flüssig-Wärmetauscher verwendet werden. Besonders vorteilhaft lässt sich die Erfindung aber bei einem Verbrennungsmotor mit Flüssigkeitskühlung, also mit Wasser- oder Ölkühlung verwenden. In diesem Fall wird als Kühlmedium Wasser mit oder ohne Zusatzstoffe, oder Öl verwendet und der Wärmetauscher für die Kraftstoffvorwärmung ist als Flüssig-Flüssig-Wärmetauscher ausgebildet.

Bei einem flüssigkeitsgekühlten Verbrennungsmotor wird üblicherweise von dem eigentlichen Kühlkreislauf ein eigener Heizkreislauf abgezweigt. Über die Regulierung dieses Heizkreislaufs wird auch die Leistung der Heizung für die Personenkabine geregelt. Vorteilhaft ist die Regulierung für die Heizung als Ventil mit veränderbarem Durchflussquerschnitt ausgeführt. Bei einer automatischen Heizungsregulierung wird das Ventil grundsätzlich elektrisch angesteuert, bei einer manuellen Heizungsregulierung kann das Ventil sowohl mechanisch als auch elektrisch angesteuert werden.

Der Wärmetauscher für die Vorwärmung des Kraftstoffs kann über einen eigenen Kreislauf gespeist werden, der wie der Heizkreislauf ebenfalls von dem Kühlkreislauf abgezweigt wird. Die Regulierung dieses Vorwärmkreislaufs kann ebenfalls über ein Ventil mit veränderbarem Durchflussquerschnitt erfolgen. Die Ansteuerung dieses Ventils erfolgt dann ebenfalls durch die Regulierung der Heizung, entweder über eine elektrische oder über eine mechanische Kopplung.

Besonders vorteilhaft wird zur Regulierung des Wärmetauschers für die Kraftstoffvorwärmung jedoch das Ventil für die Regulierung der Heizung verwendet. In diesem Fall ist der Wärmetauscher für die Kraftstoffvorwärmung direkt mit dem Heizkreislauf verbunden und es wird lediglich ein Ventil für die Regelung der Heizung und die Regelung der Kraftstoffvorwärmung benötigt.

Bei einem Ausführungsbeispiel der Erfindung sind der Wärmetauscher für die Kraftstoffvorwärmung, das Ventil für die Regulierung der Heizung und die Heizung selbst in einem Kreislauf für das Kühlmedium in beliebiger Reihenfolge in Reihe hintereinander geschaltet.

In diesem Heizkreislauf sind alle Komponenten von der Regulierung des einzigen Ventils abhängig. Wird der Querschnitt des Ventils verändert, so ändert sich nicht nur die Durchflussmenge des Kühlmediums in dem Ventil sondern ebenfalls in der in Reihe dazugeschalteten Heizung und in dem ebenfalls in Reihe dazugeschalteten Wärmetauscher für die Kraftstoffvorwärmung.

Um die Kraftstoffvorwärmung zu priorisieren ist der Wärmetauscher für die Kraftstoffvorwärmung in dem Kreislauf des Kühlmediums in Flussrichtung des Kühlmediums vor der Heizung angeordnet. Die zur Verfügung stehende Wärmeenergie wird also primär für die Vorwärmung des Kraftstoffes verwendet und erst sekundär für die Heizung der Personenkabine. Es wird in diesem Fall also zuerst dafür gesorgt, dass der Verbrennungsmotor stabil, effizient und mit geringer Abgasemission betrieben werden kann, bevor die Abwärme des Motors für die Heizung verwendet wird.

Bei einem anderen Ausführungsbeispiel der Erfindung sind der Wärmetauscher für die Kraftstoffvorwärmung und die Heizung in einem Kreislauf für das Kühlmedium parallel geschaltet. Das Ventil ist hier vor oder hinter dem Wärmetauscher für die Kraftstoffvorwärmung und der Heizung so in den Kreislauf eingefügt, dass sich mit dem Ventil sowohl der Durchfluss des Kühlmediums durch den Wärmetauscher für die Kraftstoffvorwärmung, als auch der Durchfluss des Kühlmediums durch die Heizung regulieren lassen. Auch bei diesem Ausführungsbeispiel ist nur ein einziges Ventil zur Regulierung der Kraftstoffvorwärmung und der Heizung für die Personenkabine notwendig.

Es ist allerdings keine Priorisierung des Wärmetauschers für die Kraftstoffvorwärmung möglich. Andererseits besteht aber bei diesem Ausführungsbeispiel die Möglichkeit, über unterschiedliche Leitungsquerschnitte eine feste Aufteilung der zur Verfügung stehenden Wärmeenergie an den Wärmetauscher für die Kraftstoffvorwärmung und an die Heizung zu bewirken.

Weitere Einzelheiten und Vorteile der Erfindung ergeben sich aus der Beschreibung eines Ausführungsbeispiels, das anhand der Zeichnung eingehend erläutert wird.

Es zeigt:
- Fig. 1: eine schematische Ansicht eines ersten Ausführungsbeispiels der Erfindung,
- Fig. 2: eines zweiten Ausführungsbeispiels der Erfindung und
- Fig. 3: eines dritten Ausführungsbeispiels der Erfindung

In der Zeichnung sind drei unterschiedliche Ausführungsbeispiele der Erfindung dargestellt. Die Erfindung ist jedoch nicht auf diese Ausführungsbeispiele beschränkt. Gleiche Komponenten sind in den unterschiedlichen Ausführungsbeispielen mit gleichen Bezugszeichen versehen.

In allen drei Ausführungsbeispielen ist ein Dieselmotor 1 gezeigt. Weiterhin ist eine Personenkabine 3 gezeigt, in der sich ein Fahrer und evtl. zu befördernde Personen aufhalten können. Die Personenkabine 3 wird über die Kabinenheizung 4 und den Ventilator 5 bei niedrigen Außentemperaturen temperiert. Hierzu wird von dem Ventilator 5 Luft aus der Kabine, oder von außen zugeführte Frischluft durch die als Wärmetauscher ausgeführte Kabinenheizung 4 geblasen. Dabei wird Wärmeenergie von dem zugeführten Kühlmedium 9 auf die Luft übertragen.

Der Durchfluss des zufließenden Kühlmediums 9 - und damit auch die Leistung der Kabinenheizung 4 - wird über das Ventil 6 reguliert. Mit dem Bezugszeichen 10 ist bei allen drei Ausführungsbeispielen das in den Dieselmotor 1 zurückgeführte Kühlmedium bezeichnet.

Ebenso bei allen drei Ausführungsbeispielen ist eine Kraftstoffvorwärmung 7 vorgesehen, die als Flüssig-Flüssig-Wärmetauscher ausgebildet und, genauso wie die Kabinenheizung 4,mit dem zugeführten Kühlmedium 9 gespeist wird. Der Kraftstoff 8 wird mit einer, hier nicht gezeigten, Kraftstoffförderpumpe aus dem Tank 2 gefördert und über die Kraftstoffvorwärmung 7 dem Dieselmotor 1 zugeführt. Der Anschluss der Kraftstoffvorwärmung 7 an das Kühlmedium ist jedoch bei allen drei Ausführungsbeispielen unterschiedlich gelöst.

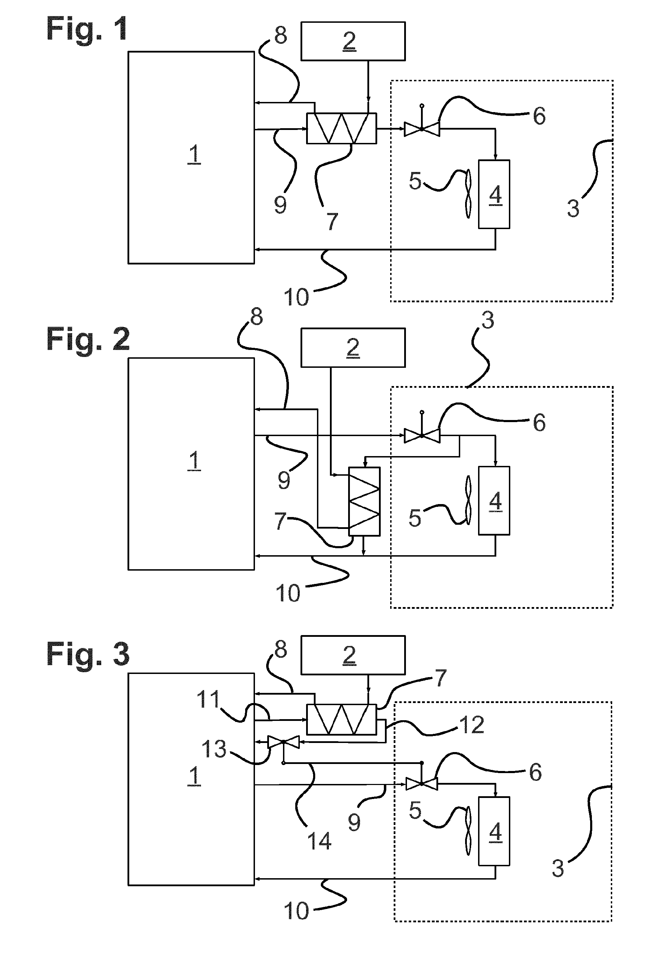

Bei dem Ausführungsbeispiel nach Fig. 1 sind die Kraftstoffvorwärmung 7, das Ventil 6 für die Heizungsregulierung und die Kabinenheizung 4 selbst in dem Kühlmittelkreislauf 9, 10 in Reihe geschaltet. Der gesamte Kreislauf wird folglich durch das Ventil 6 für die Heizungsregulierung reguliert.

Bei sehr kühler Außentemperatur wird üblicherweise das Ventil 6 für die Heizungsregulierung ganz geöffnet, so dass die Kabinenheizung 4 ihre volle Leistung entfaltet. Da die Kraftstoffvorwärmung 7 noch vor der Kabinenheizung 4 in den Kreislauf eingeschaltet ist, wird primär Wärmeenergie aus dem zugeführten Kühlmedium 9 auf den Kraftstoff 8 übertragen.

Das macht sich insbesondere in der Warmlaufphase des Dieselmotors 1 bemerkbar, da in diesem Zeitraum die Temperatur des Kühlmediums nur langsam ansteigt. Nach der Warmlaufphase wird dagegen soviel Abwärme produziert, dass die in dem zugeführten Kühlmedium 9 gespeicherte Wärmeenergie ohne weiteres für die Vorwärmung des Kraftstoffs 8 und das Heizen der Personenkabine 3 ausreicht.

Bei einer höheren Außentemperatur wird weniger Heizleistung benötigt, um den Innenraum der Personenkabine 3 angenehm zu temperieren. Entsprechend wird das Ventil 6 für die Heizungsregulierung eingestellt. Wie bereits oben erläutert, kann diese Einstellung über eine Automatik erfolgen, die beispielsweise die Innentemperatur der Personenkabine 3 misst und die Heizung entsprechend nachregelt, oder aber das Ventil 6 für die Heizungsregulierung wird manuell so eingestellt, dass die Innentemperatur der Personenkabine 3 als angenehm empfunden wird.

In beiden Fällen wird durch die Regulierung des Ventils 6 für die Heizungsregulierung nicht nur die Heizung 4, sondern auch die Kraftstoffvorwärmung 7 beeinflusst. Das bedeutet, dass an wärmeren Tagen der Kraftstoff 8 weniger stark vorgewärmt wird als an sehr kalten Tagen. Bei einer Außentemperatur, die oberhalb von 22° Celsius liegt, wird normalerweise keine Heizung für die Personenkabine 3 mehr benötigt. Bei diesen Außentemperaturen kann aber ebenso auf eine Vorwärmung des Kraftstoffs 8 verzichtet werden.

Bei dem in Fig. 2 gezeigten Ausführungsbeispiel sind Kabinenheizung 4 und Kraftstoffvorwärmung 7 nicht hintereinander sondern parallel geschaltet. Das bedeutet, dass das zugeführte Kühlmedium 9 sowohl bei der Kabinenheizung 4, als auch bei der Kraftstoffvorwärmung 7 mit der gleichen Temperatur ankommt. Es werden folglich sowohl die Heizung 4, als auch die Kraftstoffvorwärmung 7 auch schon in der Warmlaufphase des Dieselmotors 1 mit Wärmeenergie versorgt.

Da für das Aufheizen der Personenkabine 3 normalerweise mehr Wärmeleistung als für die Vorwärmung des Kraftstoffs benötigt wird, kann ein fester Leistungsquotient über die Leitungsquerschnitte eingestellt werden. So wird üblicherweise der Querschnitt der Leitung zu der Kraftstoffvorwärmung 7 kleiner als der Querschnitt der Leitung zu der Kabinenheizung 4 ausgelegt werden. Statt unterschiedliche Leitungsquerschnitte zu verwenden, lässt sich natürlich auch eine entsprechende Drossel einbauen.

Die Regulierung der Kabinenheizung 4 sowie der Kraftstoffvorwärmung 7 erfolgt wiederum nur durch das Ventil 6 für die Heizungsregulierung. Dieses ist so in den Kühlmittelkreislauf 9, 10 eingeschaltet, dass es sich noch vor der Verzweigung des zugeführten Kühlmediums 9 zur Kabinenheizung 4 und zur Kraftstoffvorwärmung 7 befindet. Dadurch werden mit dem Ventil 6 für die Heizungsregulierung wiederum, wie bereits beim ersten Ausführungsbeispiel, die Zuflüsse für beide Komponenten reguliert.

Fig. 3 zeigt ein weiteres Ausführungsbeispiel der Erfindung. Hier werden zwei unterschiedliche Kühlmittelkreisläufe verwendet. Bei dem Kraftstoffvorwärmkreislauf 11, 12 wird das zugeführte Kühlmedium 11 direkt aus dem Dieselmotor 1 der Kraftstoffvorwärmung 7 zugeführt. Nach der Erwärmung des Kraftstoffs 8 wird das leicht abgekühlte Kühlmedium 12 über das Ventil 13 für die Kraftstoffvorwärmregulierung wieder zum Dieselmotor 1 zurückgeführt.

Der Heizkreislauf 9, 10 wird dagegen wie üblich durch das zugeführte Kühlmedium 9, das Ventil 6 für die Heizungsregulierung, die Kabinenheizung 4 und das zurückgeführte Kühlmedium 10 realisiert.

Das Ventile 6 für die Heizungsregulierung und das Ventil 13 für die Kraftstoffvorwärmregulierung sind über die Kopplung 14 miteinander verbunden. Bei elektrisch betätigten Ventilen können die beiden zur Betätigung vorgesehenen Servomotoren in einfacher Weise elektrisch synchronisiert werden. Bei manuell betätigbaren Ventilen kann eine mechanische Kopplung, beispielsweise eine Koppelstange, vorgesehen sein.

Die Lösung nach dem letzten Ausführungsbeispiel bietet sich insbesondere bei Fahrzeugen an, bei denen die Personenkabine einen gewissen Abstand zum Motor aufweist. Hier kann die Kraftstoffvorwärmung 7 in einem sehr kleinen Kreislauf ganz dicht am Motor 1 platziert werden, so dass der Kraftstoff 8 nach der Vorwärmung vor Eintritt in den Motor 1 nicht wieder abkühlen kann. Es ist lediglich ein elektrisch ansteuerbares zusätzliches Ventil 13 für die Kraftstoffvorwärmregulierung zu verbauen, wobei der Abstand zwischen diesem Ventil und dem Ventil 6 für die Heizungsregulierung keine Rolle spielt. Es muss lediglich eine elektrische Leitung zwischen beiden Ventilen oder zwischen dem Ventil 13 für die Kraftstoffvorwärmregulierung und einer evtl. vorhanden Heizungsautomatik verlegt werden.

Der Kraftstoffvorwärmkreislauf 11, 12 kann bei diesem Ausführungsbeispiel direkt an den sogenannten kleinen Kühlkreislauf des Dieselmotors 1 angeschlossen werden. Das bedeutet, dass die Kraftstoffvorwärmung 7 bereits dann mit Wärmeenergie versorgt wird, wenn während der Warmlaufphase des Dieselmotors 1 der sogenannte große Kühlkreislauf mit Kühler und Heizung über ein Steuerthermostat noch geschlossen ist. Die Kraftstoffvorwärmung 7 wird folglich auch bei sehr kalten Tagen sofort nach dem Start des Dieselmotors 1 mit einem Kühlmedium 9 versorgt, welches zumindest wärmer als die Außentemperatur ist und dessen Temperatur sehr schnell ansteigt.

Bei allen drei Ausführungsbeispielen wird für die Regulierung der Kraftstoffvorwärmung 7 weder eine eigene Sensorik noch eine eigene Steuerelektronik benötigt. Die Regulierung der Kraftstoffvorwärmung 7 erfolgt zusammen mit der Regulierung der Kabinenheizung 4, die normalerweise entsprechend der vorherrschenden Außentemperatur eingestellt ist. Eine Kraftstoffvorwärmung ist deshalb sehr einfach, kostengünstig und auch als nachträglicher Einbau realisierbar.

### Bezugszeichenliste:

- 1: Dieselmotor
- 2: Kraftstofftank
- 3: Personenkabine
- 4: Kabinenheizung
- 5: Ventilator
- 6: Ventil zur Heizungsregulierung
- 7: Kraftstoffvorwärmung
- 8: Kraftstoff
- 9: zugeführtes Kühlmedium
- 10: zurückgeführtes Kühlmedium
- 11: dem Vorwärmer zugeführtes Kühlmedium
- 12: vom Vorwärmer abgeführtes Kühlmedium
- 13: Ventil zur Vorwärmeregulierung
- 14: Ventilkopplung

## Patentansprüche

1. Vorrichtung zum Vorwärmen von Kraftstoff (8) in einem Kraftfahrzeug oder einer selbstfahrenden Arbeitsmaschine, mit Verbrennungsmotor (1) und Personenkabine (3), wobei der Verbrennungsmotor (1) über ein Kühlmedium (9, 10) gekühlt und eine Heizung (4, 5) für die Personenkabine (3) über das Kühlmedium (9, 10) erwärmt wird, mit einem Wärmetauscher (7) für die Kraftstoffvorwärmung, durch den Wärmeenergie von dem Kühlmedium (9) auf den Kraftstoff (8) übertragen wird, **dadurch gekennzeichnet, dass** eine Regulierung (6) für den Wärmetauscher (7) vorgesehen ist, die direkt an eine Regulierung der Heizung (4, 5) gekoppelt ist.

2. Vorrichtung nach Anspruch 1, **dadurch gekennzeichnet, dass** das Kühlmedium (9, 10) Wasser mit oder ohne Zusatzstoffe, oder Öl ist und der Wärmetauscher (7) für die Kraftstoffvorwärmung als Flüssig-Flüssig-Wärmetauscher ausgebildet ist.

3. Vorrichtung nach einem der Ansprüche 1 bis 2, **dadurch gekennzeichnet, dass** die Regulierung für die Heizung (4, 5) als Ventil (6) mit veränderbarem Durchflussquerschnitt ausgeführt ist.

4. Vorrichtung nach Anspruch 3, **dadurch gekennzeichnet, dass** zur Regulierung des Wärmetauschers (7) für die Kraftstoffvorwärmung das Ventil (6) für die Regulierung der Heizung (4, 5) verwendet wird.

5. Vorrichtung nach einem der Ansprüche 3 bis 4, **dadurch gekennzeichnet, dass** der Wärmetauscher (7) für die Kraftstoffvorwärmung, das Ventil (6) und die Heizung (4, 5) in einem Kreislauf für das Kühlmedium (9, 10) in beliebiger Reihenfolge in Reihe hintereinander geschaltet sind.

6. Vorrichtung nach Anspruch 5, **dadurch gekennzeichnet, dass** der Wärmetauscher (7) für die Kraftstoffvorwärmung in dem Kreislauf des Kühlmediums (9, 10) in Flussrichtung des Kühlmediums (9, 10) vor der Heizung (4, 5) angeordnet ist.

7. Vorrichtung nach einem der Ansprüche 3 bis 4, **dadurch gekennzeichnet, dass** der Wärmetauscher (7) für die Kraftstoffvorwärmung und die Heizung (4, 5) in einem Kreislauf für das Kühlmedium (9, 10) parallel geschaltet sind und das Ventil (6) vor oder hinter dem Wärmetauscher (7) für die Kraftstoffvorwärmung und der Heizung (4, 5) so in den Kreislauf eingefügt ist, dass sich mit dem Ventil (6) sowohl der Durchfluss des Kühlmediums (9, 10) durch den Wärmetauscher (7) für die Kraftstoffvorwärmung, als auch der Durchfluss des Kühlmediums (9, 10) durch die Heizung (4, 5) regulieren lassen.
